# FASCICULE DE BREVET EUROPEEN

(11) **EP 3 487 365 B1**
(45) Date de publication et mention de la délivrance du brevet: **30.09.2020**
(21) Numéro de dépôt: 17754750.2
(22) Date de dépôt: 21.07.2017
(51) Int. Cl.: A47J 27/04, A47J 36/20

(54) **PANIER À VAPEUR ET CUISEUR ÉLECTRIQUE**
DAMPFKORB UND ELEKTRISCHER KOCHER
STEAMER BASKET AND ELECTRIC COOKER

(30) Priorité: 22.07.2016 FR 1657068
(43) Date de publication de la demande: 29.05.2019
(73) Titulaire: SEB S.A., 69130 Ecully (FR)
(72) Inventeur: LV, Hua, Hangzhou Zhejiang 310051 (CN); MA, Chao, Hangzhou Zhejiang 310051 (CN)
(74) Mandataire: SEB Developpement Brevets
(86) Numéro de dépôt international: PCT/FR2017/052028
(87) Numéro de publication internationale: WO 2018/015699

(56) Documents cités:
- FR-A1- 2 899 783
- US-A1- 2007 158 339
- US-B1- 6 840 159

## Description

La présente invention concerne le domaine de la cuisson des aliments, il concerne concrètement un panier à vapeur et un cuiseur électrique.

Il est connu du document US6840159A1 un cuiseur électrique comportant un panier à vapeur qui comprend un cylindre de remplissage, lequel cylindre de remplissage étant pourvu d'une chambre de remplissage, et une paroi du fond dudit cylindre de remplissage comprenant une zone perméable, la zone perméable de la paroi du fond étant percée de plusieurs trous de passage de la vapeur qui traversent la paroi du fond, et un couvercle de fond installé sous le cylindre de remplissage, lequel couvercle de fond étant relié au cylindre de remplissage par un dispositif hermétique, l'intervalle entre le couvercle de fond et la surface inférieure de la paroi du fond enfermant une cavité de passage de vapeur, le couvercle de fond étant équipé d'un mécanisme d'ouverture, lequel mécanisme d'ouverture étant relié à la chambre de remplissage par l'intermédiaire de la cavité de passage de vapeur et les trous de passage de vapeur.

Les cuiseurs électriques pour cuire le riz, comme les cuiseurs à riz actuels, comportent un récipient interne à l'intérieur duquel est disposé un panier à vapeur, le riz est placé dans le panier à vapeur, l'eau dans le récipient interne. On chauffe le récipient interne afin de porter l'eau se trouvant dans le récipient interne à ébullition pour qu'elle pénètre dans le panier à vapeur et vienne rincer le riz, ceci jusqu'à ce que le niveau de l'eau baisse en-dessous du panier à vapeur. On procède ensuite à la séparation du riz et de l'eau. Ensuite, on continue de chauffer, et on emploie la vapeur générée pour cuire le riz à la vapeur, et l'eau du rinçage aura emporté une partie du sucre contenue dans le riz avec l'eau de riz pour obtenir ainsi un riz cuit à faible teneur en sucre.

L'utilisation des paniers à vapeur existant actuellement présente certains inconvénients, lesquels inconvénients viennent de ce qu'ils utilisent uniquement de l'eau bouillante, ce qui est peu favorable au contact entier de l'eau et du riz. La méthode dans laquelle l'eau entre dans le panier à vapeur pour venir rincer le riz ou faire en sorte que le riz absorbe l'eau ne permet pas de garantir qu'une quantité suffisante d'eau entre dans le panier à vapeur, ce qui conduit à l'impossibilité pour une partie du riz d'entrer en contact avec l'eau et donc à l'impossibilité de procéder efficacement au rinçage du riz et à l'absorption de l'eau par le riz, ce qui affecte au final la texture en bouche du riz obtenu. En outre, les structures actuelles de panier à vapeur ne permettent pas non plus de garantir la bonne réalisation du processus de séparation de l'eau et du riz, ce qui rend difficile l'obtention d'un riz à indice glycémique (IG) (sucre) bas.

L'objectif de la présente invention est de fournir un panier vapeur et un cuiseur électrique permettant de résoudre les difficultés techniques des cuiseurs électriques actuels de réalisation stable du processus de contact de l'eau et du riz ou de séparation de l'eau et du riz qui entraînent l'impossibilité de cuire un riz à indice glycémique (IG) bas.

Cet objectif est atteint par l'intermédiaire d'un panier à vapeur, caractérisé en ce qu'il comprend :
- un cylindre de remplissage, lequel cylindre de remplissage est pourvu d'une chambre de remplissage, et une paroi du fond dudit cylindre de remplissage comprend une zone perméable ; la zone perméable de la paroi du fond est percée de plusieurs trous de passage de l'eau qui traversent la paroi du fond;
- un couvercle de fond installé sous le cylindre de remplissage, lequel couvercle de fond est relié au cylindre de remplissage par un dispositif hermétique, l'intervalle entre le couvercle de fond et la surface inférieure de la paroi du fond enferme une cavité de passage de l'eau, le couvercle de fond est équipé d'un mécanisme d'ouverture, lequel mécanisme d'ouverture est relié à la chambre de remplissage par l'intermédiaire de la cavité de passage de l'eau et les trous de passage de l'eau.

Selon une autre variante de réalisation, le panier comprend une première pièce d'étanchéité installée dans la zone de contact entre le couvercle de fond et le cylindre de remplissage.

Selon une autre variante de réalisation, le couvercle de fond et le cylindre de remplissage sont assemblés.

Selon une autre variante de réalisation, le bord extérieur de la paroi du fond comprend au moins deux premiers mécanismes de fixation qui sont orientés en direction d'un côté du couvercle de fond, et le bord extérieur du couvercle de fond comprend des seconds mécanismes de fixation coopérant avec les premiers mécanismes de fixation.

Selon une autre variante de réalisation, les seconds mécanismes de fixation sont installés dans des orifices de fixation ou rainures de fixation se trouvant sur le couvercle de fond.

Selon une autre variante de réalisation, les premiers mécanismes de fixation comportent une section de transition et une section d'arrêt interconnectées, les seconds mécanismes de fixation sont installés dans les orifices de fixation du couvercle de fond, lesquels orifices de fixation comportent une section d'ouverture et une section de contraction interconnectées ; le couvercle de fond a, relativement au cylindre de remplissage, une première position de fonctionnement et une seconde position de fonctionnement ; lorsque le couvercle de fond se trouve sur la première position de fonctionnement, la section d'arrêt traverse la section d'ouverture; lorsqu'on fait passer le couvercle de fond (20) de la première position de fonctionnement à la seconde position de fonctionnement, la section de transition glisse hors de la section d'ouverture, ceci afin que la section d'arrêt s'arrête au niveau de la section de contraction.

Selon une autre variante de réalisation, le mécanisme d'ouverture présente une forme tubulaire droite ou une forme conique.

Selon une autre variante de réalisation, le couvercle de fond a une surface incurvée dont un côté est bombé dans le sens opposé à la paroi du fond (12), et le mécanisme d'ouverture est situé au centre géométrique du couvercle de fond.

Selon une autre variante de réalisation, le rapport entre la surface d'ouverture du mécanisme d'ouverture et la section transversale de la chambre de remplissage du cylindre de remplissage est supérieur ou égal à 0,05 et inférieur ou égal à 1,5.

Selon une autre variante de réalisation, le rapport entre la surface d'ouverture du mécanisme d'ouverture et la section transversale de la chambre de remplissage du cylindre de remplissage (10) est supérieur ou égal à 0,3 et inférieur ou égal à 0,8.

L'invention concerne également un cuiseur électrique caractérisé en ce qu'il comprend :
- un boîtier externe ;
- un récipient interne disposé à l'intérieur du boîtier externe ;
- un panier à vapeur tel que défini dans l'une des variantes précédentes, lequel panier à vapeur est installé à l'intérieur du récipient interne, la partie supérieure du cylindre de remplissage de ce panier à vapeur étant hermétiquement abouchée à l'ouverture du récipient interne.

Selon une autre variante de réalisation, un second joint d'étanchéité est placé entre la partie supérieure du cylindre de remplissage du panier à vapeur et l'ouverture du récipient interne.

Selon une autre variante de réalisation, le rapport entre la hauteur allant du mécanisme d'ouverture du couvercle de fond du panier à vapeur jusqu'au fond du récipient interne et la profondeur du récipient interne est supérieur ou égal à 0,1 et inférieur ou égal à 0,8.

Selon une autre variante de réalisation, la paroi du fond du cylindre de remplissage du panier à vapeur présente une structure plate ou incurvée, et le rapport entre la hauteur allant de l'ouverture du mécanisme d'ouverture jusqu'au point le plus bas de la zone perméable de la paroi du fond et la profondeur du récipient interne est supérieur ou égal à 0,1 et inférieur ou égal à 0,8.

Selon une autre variante de réalisation, la paroi du fond du cylindre de remplissage du panier à vapeur présente une structure plate ou incurvée, et le rapport entre la hauteur allant du point le plus bas de la zone perméable de la paroi du fond jusqu'au bord supérieur du récipient interne et la profondeur du récipient interne est supérieur ou égal à 0,1 et inférieur ou égal à 0,8.

Dans l'application du projet technique de la présente invention, étant donné que la paroi du fond du cylindre de remplissage comporte une zone perméable, l'eau se trouvant à l'intérieur du récipient interne est, sous l'action de la pression, envoyée à travers les orifices de passage de l'eau de cette zone perméable jusque dans la chambre de remplissage ou évacuée hors de la chambre de remplissage, de cette manière on peut ainsi réaliser de manière répétée le trempage et le rinçage du riz à l'intérieur de la chambre de remplissage, ceci afin de réduire la teneur en sucre du riz.

Après qu'on a placé le panier à vapeur dans le récipient interne, la partie supérieure du cylindre de remplissage est hermétiquement abouchée à l'ouverture du récipient interne. Dans la phase préliminaire, le niveau de l'eau se trouvant à l'intérieur du récipient interne est supérieur au mécanisme d'ouverture du couvercle de fond, de sorte à former un espace hermétique entre le panier à vapeur et le récipient interne. Comme il y a une cavité de passage de l'eau entre le couvercle de fond du panier à vapeur et la paroi du fond du cylindre de remplissage, lorsqu'on chauffe le récipient interne, la pression à l'intérieur de l'espace hermétique croît, et l'eau est, sous l'action de la pression, envoyée à travers le mécanisme d'ouverture et la cavité de passage de l'eau jusque dans la chambre de remplissage pour entrer en contact avec le riz et réaliser le rinçage, le trempage, la cuisson à l'eau et l'absorption de l'eau par le riz, puis le niveau d'eau ayant baissé, lorsque l'eau se retire de la chambre de remplissage, l'eau est séparée du riz se trouvant dans la chambre de remplissage. Le processus de rinçage ou le processus de cuisson à l'eau du riz avec l'eau se trouvant dans le récipient interne est ainsi mené à bien, on passe ensuite au processus suivant de cuisson à la vapeur du riz.

Il faut préciser que, lorsque le niveau de l'eau baisse jusqu'à atteindre le mécanisme d'ouverture, l'espace hermétique entre le panier à vapeur et le récipient interne n'est plus hermétique, cet espace désormais non-hermétique est relié à la cavité de passage de l'eau et à la chambre de remplissage. La vapeur qui s'élève entre par le mécanisme d'ouverture dans la chambre de remplissage, ou bien après être entrée dans l'espace hermétique, entre ensuite par le mécanisme d'ouverture jusque dans la chambre de remplissage, pour procéder à la cuisson vapeur du riz. A ce moment-là, comme l'espace hermétique a perdu son hermétisme, la vapeur ne s'accumulera pas dans l'espace hermétique et la pression à l'intérieur de l'espace hermétique ne croîtra pas de manière continue. Autrement dit, la vapeur à l'intérieur de l'espace hermétique ayant perdu son hermétisme est incapable de comprimer l'eau hors du récipient interne pour l'envoyer vers la cavité de passage de l'eau.

Dans l'usage du cuiseur électrique de la présente invention, le contrôle du nombre d'entrées ou de sorties de l'eau dans ou hors de la chambre de remplissage, de la température de l'eau et du temps de rétention de l'eau à l'intérieur de la chambre de remplissage permet au cuiseur électrique de réaliser de manière automatique le processus de rinçage du riz et d'absorption de l'eau par le riz, de manière que le cuiseur électrique cuise un riz à indice glycémique (IG) bas plus nutritif, et à augmenter le degré de satisfaction des consommateurs relativement au processus de cuisson. Aussi, le cuiseur électrique de la présente invention possède des fonctions multiples, est largement automatisé et est pratique à l'usage.

Les figures annexes qui constituent une partie intégrante de la présente demande sont destinées à améliorer la compréhension de la présente invention, les exemples d'applications schématiques de la présente invention et leurs explications sont destinés à expliquer la présente invention, sans pour autant constituer de restriction inappropriée de la présente invention. Dans les figures annexes :
La figure 1 est le schéma structurel d'un cuiseur à riz selon un exemple d'application possible de la présente invention.
La figure 2 est le schéma d'assemblage du récipient interne, du second joint d'étanchéité et du panier à vapeur du cuiseur à riz de la figure 1.
La figure 3 est le schéma structurel du second joint d'étanchéité et du panier à vapeur de la figure 2 lorsque ces deux parties sont séparées.
La figure 4 est le schéma structurel du cylindre de remplissage du panier à vapeur de la figure 3.
La figure 5 est un agrandissement de la zone A de la figure 4.
La figure 6 est le schéma du cylindre de remplissage du panier à vapeur du cuiseur à riz dans la première position de fonctionnement.
La figure 7 est un agrandissement de la zone B de la figure 6.
La figure 8 est le schéma du cylindre de remplissage du panier à vapeur du cuiseur à riz dans la seconde position de fonctionnement.
La figure 9 est un agrandissement de la zone C de la figure 8.
La figure 10 est le schéma du statut de cuisson lorsque le niveau de l'eau à l'intérieur du récipient interne du cuiseur à riz de la figure 1 est situé au dessous de la paroi du fond.
La figure 11 est le schéma du statut de cuisson lorsque l'eau à l'intérieur du récipient interne du cuiseur à riz de la figure 1 est montée jusque dans la chambre de remplissage.

Il faut préciser qu'en l'absence d'incompatibilité, les exemples d'applications de la présente demande et les caractéristiques de ces exemples d'applications peuvent être mutuellement combinés. On va ci-dessous expliquer de manière concise la présente invention au moyen des figures annexes de référence combinées à des exemples d'applications.

Il faut noter que les explications détaillées ci-dessous sont toutes fournies à titre d'exemples dans le but de fournir une explication plus poussée de la présente invention. Sauf mention contraire, tous les termes techniques et scientifiques employés ici ont l'acception courante telle qu'admise par le personnel technique ordinaire du domaine technique duquel relève la présente demande.

Dans la présente invention, en l'absence d'indication inverse, les termes de direction tel que "au-dessus, au-dessous, en haut de, en bas de" renvoient généralement aux orientations indiquées sur les figures annexes, ou bien renvoient aux directions verticales, perpendiculaires ou de gravité des pièces elles-mêmes. De même, afin de faciliter la compréhension et la description, "à l'intérieur de" et "à l'extérieur de" renvoient à l'intérieur ou à l'extérieur de la silhouette de la pièce en question, toutefois, les termes de direction susmentionnés ne constituent en rien une limitation de la présente invention.

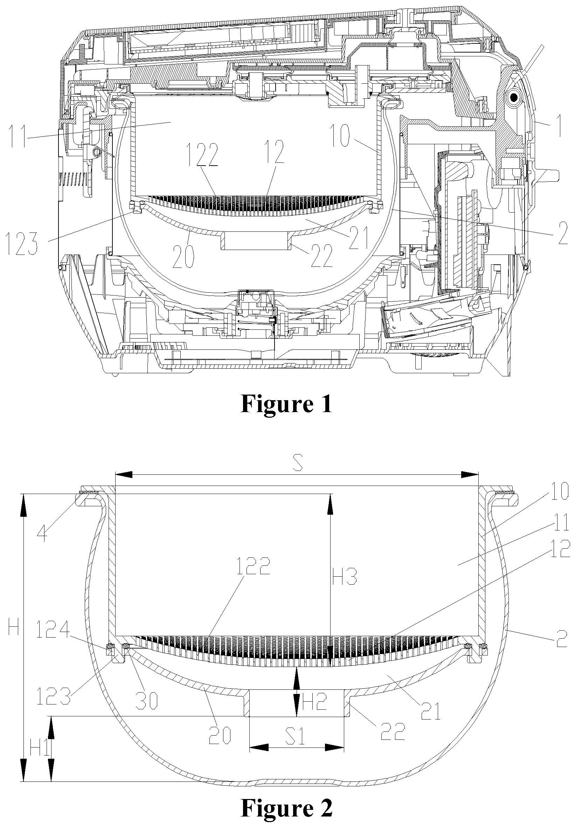

La présente invention résout les difficultés techniques des cuiseurs électriques actuels de réalisation stable du processus de contact de l'eau et du riz ou de séparation de l'eau et du riz qui entraînent l'impossibilité de cuire un riz à indice glycémique (IG) bas. La présente invention propose un panier à vapeur et un cuiseur électrique. Comme le montre l'exemple d'application possible de la figure 1, le cuiseur électrique peut être un cuiseur à riz qui comporte un boîtier externe (1), un récipient interne (2) et un panier à vapeur, lequel panier à vapeur est installé à l'intérieur du récipient interne (2), et la partie supérieure d'un cylindre de remplissage (10) du panier à vapeur et l'ouverture du récipient interne (2) sont abouchées de manière hermétique.

Un second joint d'étanchéité (4) est placé entre la partie supérieure du cylindre de remplissage (10) du panier à vapeur et l'ouverture du récipient interne (2).

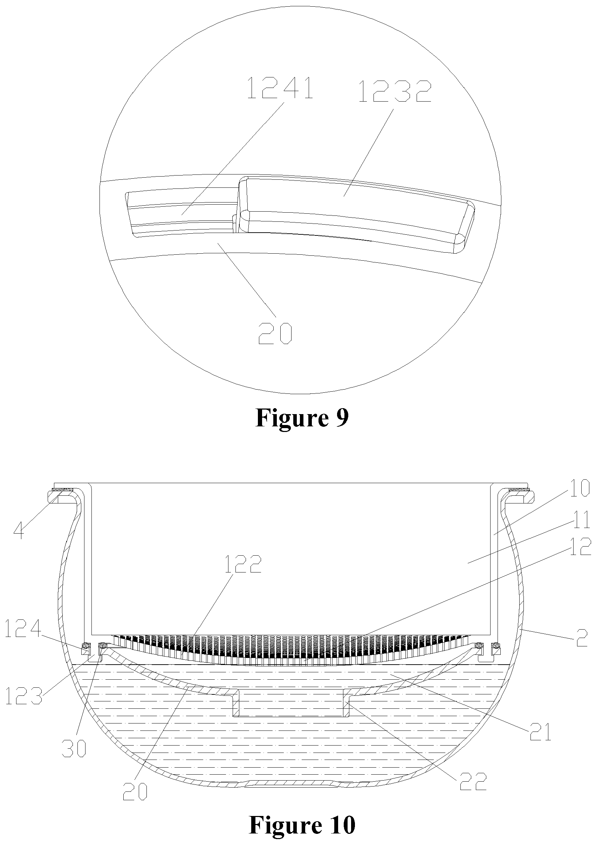

Dans le mode d'application concret de la figure 10, le bord supérieur du cylindre de remplissage (10) est abouché au bord supérieur du récipient interne (2) au moyen d'un second joint d'étanchéité (4).

Bien entendu, le cuiseur électrique de la présente invention peut être un cuiseur à riz, un four micro-ondes, un fait-tout électrique ou un cuiseur électrique sous pression. Le cuiseur électrique comporte en son sein le récipient interne (2), le second joint d'étanchéité (4) et le panier à vapeur, lequel panier vapeur possède les spécificités ci-dessous.

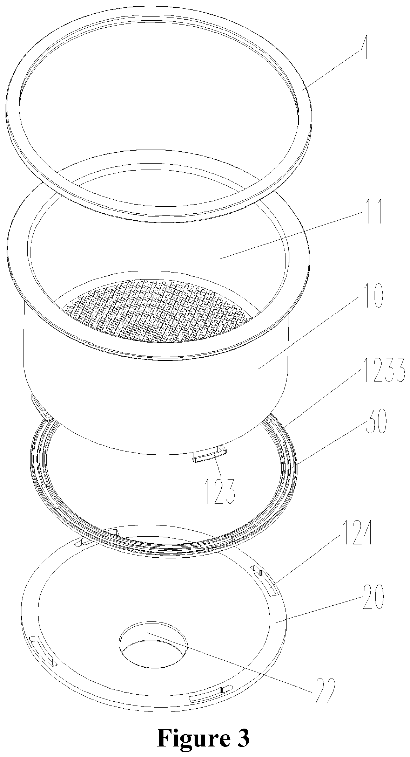

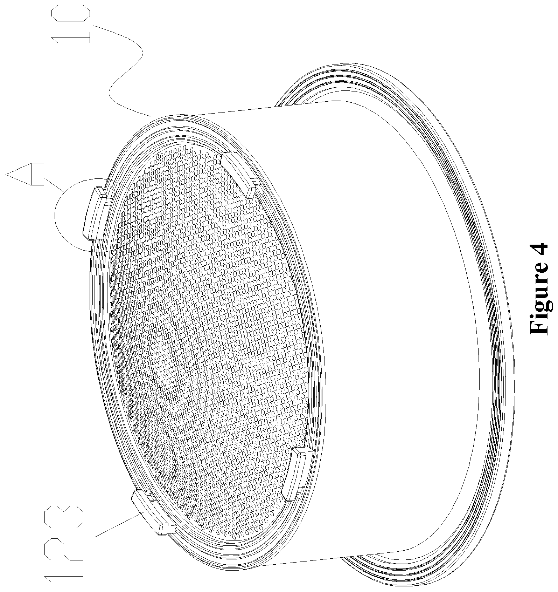

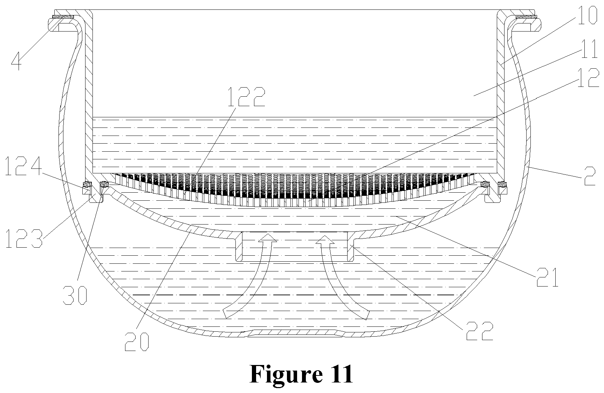

Comme le montrent les figures 2 à 11, le panier à vapeur comprend : un cylindre de remplissage (10) et un couvercle de fond (20) situé au fond du cylindre de remplissage (10). le cylindre de remplissage (10) est pourvu d'une chambre de remplissage (11), et sur la paroi du fond (12) du cylindre de remplissage (10) se trouve une zone perméable. La zone perméable de la paroi du fond (12) est percée de trous de passage de l'eau (122). Le couvercle de fond (20) est relié au cylindre de remplissage (10) par un dispositif hermétique, l'intervalle entre le couvercle de fond (20) et la surface inférieure de la paroi du fond (12) enferme une cavité de passage de l'eau (21), et la surface de projection frontale du couvercle de fond sur la paroi du fond (12) est supérieure à la surface de la zone perméable. Le couvercle de fond (20) est équipé d'un mécanisme d'ouverture (22), lequel mécanisme d'ouverture (22) est relié à la chambre de remplissage (11) par l'intermédiaire de la cavité de passage de l'eau (21) et les trous de passage de l'eau (122).

Etant donné que la paroi du fond (12) du cylindre de remplissage (10) comporte une zone perméable, l'eau se trouvant à l'intérieur du récipient interne (2), est, sous l'action de la pression, envoyée à travers les trous de passage de l'eau (122) de cette zone perméable jusque dans la chambre de remplissage (11) ou évacuée hors de la chambre de remplissage (11), de cette manière on peut ainsi réaliser de manière répétée le trempage et le rinçage du riz à l'intérieur de la chambre de remplissage (11), ceci afin de réduire la teneur en sucre du riz.

La jonction hermétique entre le couvercle de fond (20) situé sous le cylindre de remplissage (10) et le cylindre de remplissage (10) permet de garantir la bonne étanchéité à l'air de la jonction entre le couvercle de fond (20) et le cylindre de remplissage (10). Dans un même temps, comme la surface de projection frontale du couvercle de fond sur la paroi du fond (12) est supérieure à la surface de la zone perméable, l'eau se trouvant à l'intérieur du récipient interne (2) peut uniquement passer à travers le mécanisme d'ouverture (22) pour pénétrer à l'intérieur du couvercle de fond (20), ceci afin de garantir que le cuiseur électrique puisse contrôler efficacement la pression à l'intérieur du logement enfermé par le récipient interne (2), le couvercle du fond (20) et le cylindre de remplissage (10), et de garantir le bon contact entre le riz et l'eau, ceci afin d'améliorer la fiabilité du rinçage du riz par l'eau provenant du récipient interne.

Concrètement, après qu'on a placé le panier à vapeur dans le récipient interne (2), la partie supérieure du cylindre de remplissage (10) est hermétiquement abouchée à l'ouverture du récipient interne (2). Dans la phase préliminaire, le niveau de l'eau se trouvant à l'intérieur du récipient interne (2) est supérieur au mécanisme d'ouverture (22) du couvercle de fond (20), de sorte à former un espace hermétique entre le panier à vapeur et le récipient interne (2). Comme il y a une cavité de passage de l'eau (21) entre le couvercle de fond (20) du panier à vapeur et la paroi du fond (12) du cylindre de remplissage (10), lorsqu'on chauffe le récipient interne (2), la pression à l'intérieur de l'espace hermétique croît, et l'eau est, sous l'action de la pression, envoyée à travers le mécanisme d'ouverture (22) et la cavité de passage de l'eau (21) jusque dans la chambre de remplissage (11) pour entrer en contact avec le riz et réaliser le rinçage, le trempage, la cuisson à l'eau et l'absorption de l'eau par le riz, puis le niveau d'eau ayant baissé, lorsque l'eau se retire de la chambre de remplissage (11), l'eau est séparée du riz se trouvant dans la chambre de remplissage (11). Le processus de rinçage ou le processus de cuisson à l'eau du riz avec l'eau se trouvant dans le récipient interne (2) est ainsi mené à bien, on passe ensuite au processus suivant de cuisson à la vapeur du riz.

Il faut préciser que, lorsque le niveau de l'eau baisse jusqu'à atteindre le mécanisme d'ouverture (22), l'espace hermétique entre le panier à vapeur et le récipient interne (2) n'est plus hermétique, cet espace désormais non-hermétique est relié à la cavité de passage de l'eau (21) et à la chambre de remplissage (11). La vapeur qui s'élève entre par le mécanisme d'ouverture (22) dans la chambre de remplissage (11), ou bien après être entrée dans l'espace hermétique, entre ensuite par le mécanisme d'ouverture (22) jusque dans la chambre de remplissage (11), pour procéder à la cuisson vapeur du riz. A ce moment-là, comme l'espace hermétique a perdu son hermétisme, la vapeur ne s'accumulera pas dans l'espace hermétique et la pression à l'intérieur de l'espace hermétique ne croîtra pas de manière continue. Autrement dit, la vapeur à l'intérieur de l'espace hermétique ayant perdu son hermétisme est incapable de comprimer l'eau hors du récipient interne (2) pour l'envoyer vers la cavité de passage de l'eau (21).

Dans l'usage du cuiseur électrique de la présente invention, le contrôle du nombre d'entrées ou de sorties de l'eau dans ou hors de la chambre de remplissage (11), de la température de l'eau et du temps de rétention de l'eau à l'intérieur de la chambre de remplissage (11) permet au cuiseur électrique de réaliser de manière automatique le processus de rinçage du riz et d'absorption de l'eau par le riz, de manière que le cuiseur électrique cuise un riz à indice glycémique (IG) bas plus nutritif, et à augmenter le degré de satisfaction des consommateurs relativement au processus de cuisson. Aussi, le cuiseur électrique de la présente invention est multifonction, largement automatisé et pratique à l'usage.

Le panier à vapeur comporte encore une première pièce d'étanchéité, laquelle est installée à la jonction du couvercle de fond (20) et du cylindre de remplissage (10). Ainsi, on améliore encore davantage la fiabilité de l'hermétisme entre le couvercle de fond (20) et le cylindre de remplissage (10).

Le couvercle de fond (20) et le cylindre de remplissage (10) sont attachés ensemble. Ainsi, le démontage du couvercle de fond (20) et du cylindre de remplissage (10) s'en trouve facilité, et le nettoyage du couvercle de fond (20) et du cylindre de remplissage (10) en est rendu pratique.

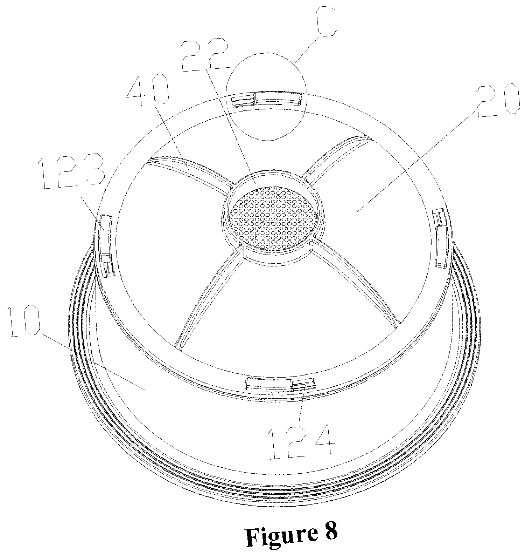

Concrètement, comme cela est représenté sur les figures 2 et 8, le bord extérieur de la paroi du fond (12) comporte au moins deux premiers mécanismes de fixation (123) qui sont orientés en direction d'un côté du couvercle de fond (20), et le bord extérieur du couvercle de fond (20) comporte des seconds mécanismes de fixation (124) correspondant aux premiers mécanismes de fixation (123). Ainsi, on améliore la fiabilité de la jonction entre le couvercle de fond (20) et le cylindre de remplissage (10).

Les premiers mécanismes de fixation (123) sont multiples, le nombre des seconds mécanismes de fixation (124) correspond à celui des premiers mécanismes de fixation (123), et chacun de ces premiers mécanismes de fixation (123) multiples correspond et s'attache avec chacun des seconds mécanismes de fixation (124).

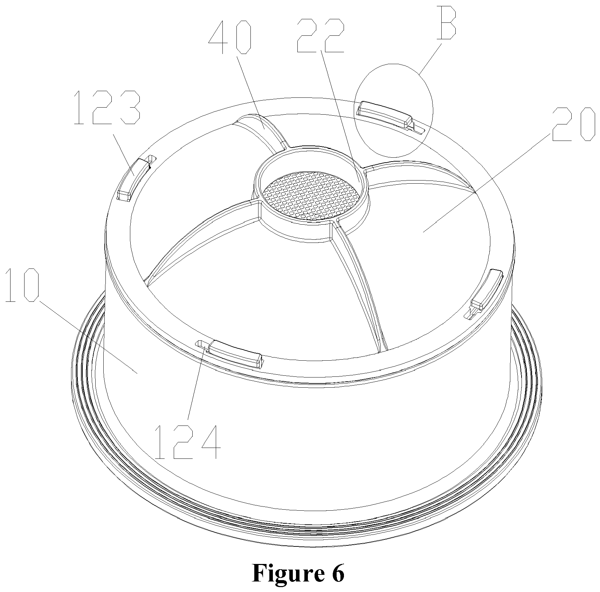

Comme cela est représenté sur les figures 6 à 9, les premiers mécanismes de fixation (123) viennent se fixer dans les seconds mécanismes de fixation (124), et après rotation de ceux-ci jusqu'à l'angle prévu les premiers mécanismes de fixation (123) sont solidement fixés dans les seconds mécanismes de fixation (124). Ainsi, l'utilisateur peut en faisant tourner le couvercle de fond (20) sur le cylindre de remplissage (10) assembler ou démonter aisément le couvercle de fond (20) du cylindre de remplissage (10), la commodité d'usage du panier à vapeur s'en trouve améliorée.

Les seconds mécanismes de fixation (124) sont installés dans les orifices de fixation ou rainures de fixation se trouvant sur le couvercle de fond (20).

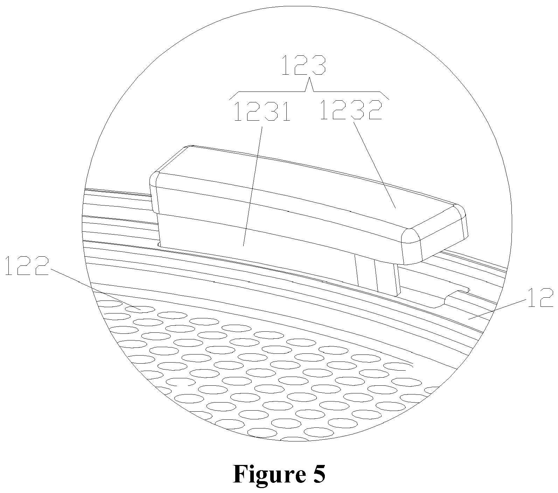

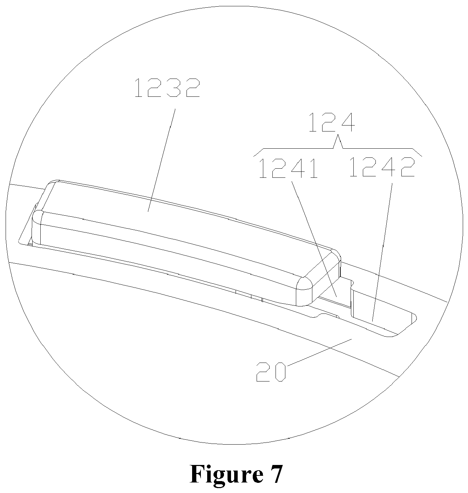

Comme l'indiquent les figures 5 et 7, les premiers mécanismes de fixation (123) comportent une section de transition (1231) et une section d'arrêt (1232) interconnectées, les seconds mécanismes de fixation (124) sont installés dans les trous de fixation du couvercle de fond (20), lesquels trous de fixation comportent une section d'ouverture (1241) et une section de contraction (1242) interconnectées. Le couvercle de fond (20) a, relativement au cylindre de remplissage (10), une première position de fonctionnement et une seconde position de fonctionnement. Lorsque le couvercle de fond (20) se trouve sur la première position de fonctionnement, la section d'arrêt (1232) traverse la section d'ouverture (1241). Lorsqu'on fait passer le couvercle de fond (20) de la première position de fonctionnement à la seconde position de fonctionnement, la section de transition (1231) glisse hors de la section d'ouverture (1241), ceci afin que la section d'arrêt (1232) s'arrête au niveau de la section de contraction (1242). Ainsi, l'usage d'une structure concrète constituée des premiers mécanismes de fixation et des trous de fixation permet, en faisant passer le couvercle de fond (20) de la première position de fonctionnement à la seconde position de fonctionnement, de restreindre efficacement le mouvement du couvercle de fond (20) sur son axe vers le haut par rapport au cylindre de remplissage (10).

Dans un exemple d'application, comme cela est représenté sur les figures 2, 3, 10 et 11, le panier à vapeur comprend encore une première pièce d'étanchéité, laquelle première pièce d'étanchéité est placée à la jonction entre le couvercle de fond (20) et le cylindre de remplissage (10), cette première pièce d'étanchéité étant le premier joint d'étanchéité (30), lequel premier joint d'étanchéité est pourvu des orifices d'esquive (1233) destinés à esquiver les premiers mécanismes de fixation (123). Ainsi on peut garantir efficacement la bonne étanchéité à l'air de la jonction entre le couvercle de fond (20) et le cylindre de remplissage (10), et éviter que l'eau ou la vapeur se trouvant à l'intérieur du récipient interne (2) ne passe à travers la jonction entre le couvercle de fond (20) et le cylindre de remplissage (10) et ne pénètre dans la cavité de passage de l'eau (21).

Le mécanisme d'ouverture (22) présente une forme tubulaire droite ou une forme conique. La fabrication des mécanismes d'ouverture (22) de forme tubulaire est aisée. Le mécanisme d'ouverture (22) ayant la forme conique permet de faire en sorte que la vapeur générée par l'eau bouillante se trouvant à l'intérieur du récipient interne (2) pénètre facilement et en grande quantité dans la chambre de remplissage (11), ce qui permet de raccourcir le temps de cuisson à la vapeur du riz se trouvant dans la chambre de remplissage (11) et d'améliorer ainsi le côté pratique du cuiseur électrique. Le mécanisme d'ouverture (22) de forme conique permet de réduire la capacité de l'espace enfermé par le mécanisme d'ouverture, ce qui permet à l'eau se trouvant à l'intérieur du récipient interne (2) d'entrer plus aisément à l'intérieur de la chambre de remplissage (11), et d'élever efficacement la hauteur du niveau de l'eau dans la chambre de remplissage (11) de manière à faciliter le trempage du riz dans la chambre de remplissage (11), et à améliorer ainsi le côté pratique du cuiseur électrique.

Le mécanisme d'ouverture (22) est installé sur les orifices du couvercle de fond (20).

Le couvercle de fond (20) a une surface incurvée dont un côté est bombé dans le sens opposé à la paroi du fond (12), et le mécanisme d'ouverture (22) est situé au centre géométrique du couvercle de fond (20). Ainsi, lorsque l'eau peut grâce au mécanisme d'ouverture (22) s'écouler régulièrement par la cavité de passage de l'eau (21) pour entrer dans la chambre de remplissage (11), l'eau peut à l'heure programmée entrer rapidement et entièrement en contact avec le riz se trouvant à l'intérieur de la chambre de remplissage (11), de manière à réaliser le rinçage fiable du riz se trouvant dans la chambre de remplissage (11), et dans un même temps à garantir la constance d'absorption de l'eau par le riz dans la chambre de remplissage (11).

Comme cela est indiqué sur les figures 6 et 8, le panier vapeur comprend encore plusieurs renforcements (40), lesquels renforcements sont situés sur la surface du côté du couvercle de fond opposé au cylindre de remplissage (10) et sont disposés dans le prolongement du rayon du couvercle de fond (20). Ces multiples renforcements (40) sont situés de part et d'autre du périmètre du mécanisme d'ouverture (22) et séparés par celui-ci. Ainsi on parvient à renforcer efficacement la structure du couvercle de fond (20), à éviter que le couvercle de fond (20) qui est soumis pendant de longues durées à l'impact de l'eau et de la vapeur ne se déforme, et donc à rallonger la durée de vie du couvercle de fond (20).

Le mécanisme d'ouverture (22) présente une symétrie axiale sur la projection orthogonale de la paroi du fond (12). Ainsi on peut améliorer l'aspect esthétique du panier à vapeur et également le confort d'utilisation du cuiseur électrique par l'utilisateur. Par ailleurs, lorsque le panier à vapeur est posé sur la surface plane destinée à le recevoir, le mécanisme d'ouverture (22) réduit la surface de contact entre le panier à vapeur et la surface plane, ce qui permet d'économiser la surface occupée par le panier à vapeur, et d'améliorer l'aspect pratique du panier à vapeur. Le mécanisme d'ouverture (22) qui présente une symétrie axiale permet de répartir de manière uniforme la force subie par le panier à vapeur, ce qui permet donc d'améliorer la stabilité du panier à vapeur lorsqu'il est placé sur une surface plane.

La paroi du fond (12) présente une structure plate ou incurvée. La paroi du fond (12) présentant une structure plate a l'avantage d'être facile à fabriquer, ce qui réduit les coûts de revient de la fabrication des paniers à vapeur, dans un même temps cela permet de garantir que la profondeur du riz se trouvant sur la paroi du fond (12) est partout égale, et donc que durant le processus de cuisson à la vapeur du riz, le riz soit cuit de la même façon sur un niveau égal.

La paroi du fond (12) présentant une structure incurvée permet de satisfaire les besoins de divers autres utilisateurs.

Concrètement, en ce qui concerne les structures incurvées de la paroi du fond (12), la paroi du fond (12) présentant une structure incurvée est soit bombée du côté faisant face au cylindre de remplissage (10) soit bombée du côté opposé au cylindre de remplissage (10). La paroi du fond (12) présentant une structure incurvée bombée du coté faisant face au cylindre de remplissage (10) permet de faire en sorte que la profondeur du riz se trouvant sur la paroi du fond (12) soit progressivement réduite depuis les quatre bords jusqu'au centre, la quantité de riz se trouvant au centre de la paroi du fond (12) étant moindre, de sorte que la vapeur passera plus facilement à travers le riz se trouvant au centre de la paroi du fond (12) et pénétrera jusque dans l'espace de la chambre de remplissage (11) situé au-dessus de la couche de riz, ce qui permettra au riz de la couche supérieure se trouvant dans la chambre de remplissage de cuire plus facilement à la vapeur, et on aura donc amélioré ainsi la fiabilité d'utilisation du cuiseur électrique. Comme l'indiquent les exemples d'applications des figures 2, 10 et 11, la paroi du fond (12) présentant une structure incurvée bombée du côté opposé au cylindre de remplissage (10) permet d'augmenter la surface effective de la chambre de remplissage (11) au dessus de la paroi du fond (12), et d'augmenter ainsi la quantité de riz que peut contenir la chambre de remplissage (11).

Dans un exemple d'application non illustré aux figures, la paroi du fond (12) comporte une zone périphérique entourant la zone centrale située au centre de la paroi du fond (12), avec un côté de la zone centrale bombée vers la chambre de remplissage (11), un côté de la zone périphérique bombée dans le sens opposé à la chambre centrale, et au moins une partie de la zone centrale et au moins une partie de la zone périphérique étant pourvues d'une zone perméable. Ainsi, en augmentant la capacité effective de la chambre de remplissage, la vapeur passe plus facilement à travers le riz se trouvant sur la zone centrale de la paroi du fond (12) et pénètre jusque dans l'espace de la chambre de remplissage (11) situé au dessus de la couche de riz, ce qui permet à la couche supérieure du riz se trouvant dans la chambre de remplissage (11) d'être plus aisément cuit à la vapeur, et la zone périphérique peut accueillir davantage de riz. On améliore ainsi la commodité d'utilisation du cuiseur électrique.

Les trous de passage de l'eau (122) sont de forme ronde, ovale, de noix de cajou, ou polygonale ; soit ils présentent tous la même forme soit ils mêlent plusieurs de ces formes. Ainsi, la forme et la taille rationnelles des trous de passage de l'eau (122) permettent, lorsque l'eau se trouvant dans le récipient interne (2) est envoyée sous l'action de la pression à travers les trous de passage de l'eau (122), de faire en sorte que les grains de riz de taille réduite passent à travers les trous de passage de l'eau (122) pour être emmenés jusque dans la chambre de remplissage (11), et, dans un même temps, permettent d'éviter que l'eau n'emporte les grains de riz de taille importante jusque dans le récipient interne (2) et donc tout gaspillage de riz. On améliore ainsi la commodité d'utilisation du panier à vapeur.

Dans la structure d'assemblage du panier à vapeur et du récipient interne (2) de la présente invention, afin de garantir que l'eau se trouvant à l'intérieur du récipient interne (2) entre dans ou sorte correctement de la chambre de remplissage (11), de manière à ce que le cuiseur électrique réalise sans encombre les processus de rinçage du riz, d'absorption de l'eau par le riz, de cuisson à l'eau du riz et de cuisson vapeur du riz, et pour produire un récipient interne (2) et un panier à vapeur de structure rationnelle, la présente invention a établi certaines restrictions paramétriques relativement aux dimensions du récipient interne (2) et du panier vapeur, qui sont concrètement les suivantes :
Comme le montre la figure 2, le rapport de la surface d'ouverture S1 du mécanisme d'ouverture (22) et la section transversale S de la chambre de remplissage (11) du cylindre de remplissage (10) est supérieur ou égal à 0,05 et inférieur ou égal à 1,5.

Le rapport de la surface d'ouverture S1 du mécanisme d'ouverture (22) et la section transversale S de la chambre de remplissage (11) du cylindre de remplissage (10) est supérieur ou égal à 0,3 et inférieur ou égal à 0,8.

Comme le montre la figure 2, le rapport entre la hauteur H1 allant du mécanisme d'ouverture (22) du couvercle de fond (20) du panier à vapeur jusqu'au fond du récipient interne (2) et la profondeur H du récipient interne (2) est supérieur ou égal à 0,1 et inférieur ou égal à 0,8.

La paroi du fond (12) du cylindre de remplissage (10) du panier à vapeur présente une structure plate ou incurvée, et le rapport entre la hauteur H2 allant de l'ouverture du mécanisme d'ouverture (22) jusqu'au point le plus bas de la zone perméable de la paroi du fond (12) et la profondeur H du récipient interne (2) est supérieur ou égal à 0,1 et inférieur ou égal à 0,8.

Dans un exemple d'application de la présente invention non illustré, la paroi du fond (12) présente une structure plate, le rapport entre la distance allant de la paroi du fond (12) à structure plate jusqu'au bord supérieur du récipient interne (2) et la profondeur H du récipient interne (2) est supérieur ou égal à 0,1 et inférieur ou égal à 0,8.

Le rapport entre la hauteur H3 allant du point le plus bas de la zone perméable de la paroi du fond (12) présentant une surface incurvée jusqu'au bord supérieur du récipient interne (2) et la profondeur H du récipient interne (2) est supérieur ou égal à 0,1 et inférieur ou égal à 0,8.

Il faut noter que les termes techniques employés ici sont uniquement destinés à décrire des modes d'applications concrets, et non à limiter les modes d'applications fournis à titre d'exemples selon la présente demande. Il faut aussi comprendre que l'usage dans la présente description des termes "comporter" et/ou "inclure" implique qu'il existe des caractéristiques, étapes, tâches, composants, pièces et/ou des éléments les constituant.

Il faut préciser que les termes techniques "premier(ère)" et "second(e)" employés dans la description, les revendications, et les figures annexes de la présente demande servent à distinguer des phénomènes semblables et non décrire une séquence spécifique ou un ordre d'antériorité-postériorité. Il faut comprendre que les données utilisées ainsi peuvent, dans des conditions appropriées, être interchangées.

Les exemples mentionnés plus haut constituent uniquement des exemples d'applications préférables de la présente invention, ils ne constituent en rien une restriction à la présente invention.

## Revendications

1. Cuiseur électrique comprenant un panier à vapeur qui comprend :
- un cylindre de remplissage (10), lequel cylindre de remplissage (10) étant pourvu d'une chambre de remplissage (11), et une paroi du fond (12) dudit cylindre de remplissage (10) comprenant une zone perméable ; la zone perméable de la paroi du fond (12) étant percée de plusieurs trous de passage de l'eau (122) qui traversent la paroi du fond (12) ;
- un couvercle de fond (20) installé sous le cylindre de remplissage (10), lequel couvercle de fond (20) étant relié au cylindre de remplissage (10) par un dispositif hermétique, l'intervalle entre le couvercle de fond (20) et la surface inférieure de la paroi du fond (12) enfermant une cavité de passage de l'eau (21), le couvercle de fond (20) étant équipé d'un mécanisme d'ouverture (22), lequel mécanisme d'ouverture (22) étant relié à la chambre de remplissage (11) par l'intermédiaire de la cavité de passage de l'eau (21) et les trous de passage de l'eau (122),
**caractérisé en ce que** le cuiseur électrique comprend un boîtier externe (1), un récipient interne (2) disposé à l'intérieur du boîtier externe (1), le panier à vapeur étant installé à l'intérieur du récipient interne (2), la partie supérieure du cylindre de remplissage (10) de ce panier à vapeur étant hermétiquement abouchée à l'ouverture du récipient interne (2).

2. Cuiseur électrique selon la revendication 1, **caractérisé en ce qu'**il comprend une première pièce d'étanchéité installée dans la zone de contact entre le couvercle de fond (20) et le cylindre de remplissage (10).

3. Cuiseur électrique selon la revendication 1, **caractérisé en ce que** le couvercle de fond (20) et le cylindre de remplissage (10) sont assemblés.

4. Cuiseur électrique selon l'une des revendications précédentes, **caractérisé en ce que** le bord extérieur de la paroi du fond (12) comprend au moins deux premiers mécanismes de fixation (123) qui sont orientés en direction d'un côté du couvercle de fond (20), et le bord extérieur du couvercle de fond (20) comprend des seconds mécanismes de fixation (124) coopérant avec les premiers mécanismes de fixation (123).

5. Cuiseur électrique selon la revendication 4, **caractérisé en ce que** les seconds mécanismes de fixation (124) sont installés dans des orifices de fixation ou rainures de fixation se trouvant sur le couvercle de fond (20).

6. Cuiseur électrique selon la revendication 5, **caractérisé en ce que** les premiers mécanismes de fixation (123) comportent une section de transition (1231) et une section d'arrêt (1232) interconnectées, les seconds mécanismes de fixation (124) sont installés dans les orifices de fixation du couvercle de fond (20), lesquels orifices de fixation comportent une section d'ouverture (1241) et une section de contraction (1242) interconnectées ; le couvercle de fond (20) a, relativement au cylindre de remplissage (10), une première position de fonctionnement et une seconde position de fonctionnement ; lorsque le couvercle de fond (20) se trouve sur la première position de fonctionnement, la section d'arrêt (1232) traverse la section d'ouverture (1241) ; lorsqu'on fait passer le couvercle de fond (20) de la première position de fonctionnement à la seconde position de fonctionnement, la section de transition (1231) glisse hors de la section d'ouverture (1241), ceci afin que la section d'arrêt (1232) s'arrête au niveau de la section de contraction (1242).

7. Cuiseur électrique selon l'une des revendications précédentes, **caractérisé en ce que** le mécanisme d'ouverture (22) présente une forme tubulaire droite ou une forme conique.

8. Cuiseur électrique selon l'une des revendications précédentes, **caractérisé en ce que** le couvercle de fond (20) a une surface incurvée dont un côté est bombé dans le sens opposé à la paroi du fond (12), et le mécanisme d'ouverture (22) est situé au centre géométrique du couvercle de fond (20).

9. Cuiseur électrique selon l'une des revendications précédentes, **caractérisé en ce que** le rapport entre la surface d'ouverture S1 du mécanisme d'ouverture (22) et la section transversale S de la chambre de remplissage (11) du cylindre de remplissage (10) est supérieur ou égal à 0,05 et inférieur ou égal à 1,5.

10. Cuiseur électrique selon la revendication 9, **caractérisé en ce que** le rapport entre la surface d'ouverture S1 du mécanisme d'ouverture (22) et la section transversale S de la chambre de remplissage (11) du cylindre de remplissage (10) est supérieur ou égal à 0,3 et inférieur ou égal à 0,8.

11. Cuiseur électrique selon la revendication 1, **caractérisé en ce qu'**un second joint d'étanchéité (4) est placé entre la partie supérieure du cylindre de remplissage (10) du panier à vapeur et l'ouverture du récipient interne (2).

12. Cuiseur électrique selon l'une des revendications 1 ou 11, **caractérisé en ce que** le rapport entre la hauteur H1 allant du mécanisme d'ouverture (22) du couvercle de fond (20) du panier à vapeur jusqu'au fond du récipient interne (2) et la profondeur H du récipient interne (2) est supérieur ou égal à 0,1 et inférieur ou égal à 0,8.

13. Cuiseur électrique selon l'une des revendications 1, 11 ou 12, **caractérisé en ce que** la paroi du fond (12) du cylindre de remplissage (10) du panier à vapeur présente une structure plate ou incurvée, et le rapport entre la hauteur H2 allant de l'ouverture du mécanisme d'ouverture (22) jusqu'au point le plus bas de la zone perméable de la paroi du fond (12) et la profondeur H du récipient interne (2) est supérieur ou égal à 0,1 et inférieur ou égal à 0,8.

14. Cuiseur électrique selon la revendication 1, **caractérisé en ce que** la paroi du fond (12) du cylindre de remplissage (10) du panier à vapeur présente une structure plate ou incurvée, et le rapport entre la hauteur H3 allant du point le plus bas de la zone perméable de la paroi du fond (12) jusqu'au bord supérieur du récipient interne (2) et la profondeur H du récipient interne (2) est supérieur ou égal à 0,1 et inférieur ou égal à 0,8.

## Patentansprüche

1. Elektrisches Gargerät, das einen Dampfkorb umfasst, welcher umfasst:
- einen Füllzylinder (10), welcher Füllzylinder (10) mit einer Füllkammer (11) versehen ist, und wobei eine Wand des Bodens (12) des Füllzylinders (10) einen durchlässigen Bereich umfasst; wobei der durchlässige Bereich der Wand des Bodens (12) mit mehreren Löchern für den Durchtritt des Wassers (122) durchbrochen ist, die durch die Wand des Bodens (12) hindurchgehen;
- einen Bodendeckel (20), der unter dem Füllzylinder (10) installiert ist, welcher Bodendeckel (20) über eine dichte Vorrichtung mit dem Füllzylinder (10) verbunden ist, wobei der Abstand zwischen dem Bodendeckel (20) und der unteren Fläche der Wand des Bodens (12) einen Hohlraum für den Durchtritt des Wassers (21) umschließt, wobei der Bodendeckel (20) mit einem Öffnungsmechanismus (22) ausgestattet ist, welcher Öffnungsmechanismus (22) vermittels des Hohlraums für den Durchtritt des Wassers (21) und der Löcher für den Durchtritt des Wassers (122) mit der Füllkammer (11) verbunden ist,
**dadurch gekennzeichnet, dass** das elektrische Gargerät ein Außengehäuse (1) umfasst, einen Innenbehälter (2), der im Inneren des Außengehäuses (1) angeordnet ist, wobei der Dampfkorb im Inneren des Innenbehälters (2) installiert ist, wobei der obere Teil des Füllzylinders (10) dieses Dampfkorbs dicht an der Öffnung des Innenbehälters (2) anschließt.

2. Elektrisches Gargerät nach Anspruch 1, **dadurch gekennzeichnet, dass** es ein erstes Dichtungsstück umfasst, das im Kontaktbereich zwischen dem Bodendeckel (20) und dem Füllzylinder (10) installiert ist.

3. Elektrisches Gargerät nach Anspruch 1, **dadurch gekennzeichnet, dass** der Bodendeckel (20) und der Füllzylinder (10) zusammengefügt sind.

4. Elektrisches Gargerät nach einem der vorstehenden Ansprüche, **dadurch gekennzeichnet, dass** der äußere Rand der Wand des Bodens (12) mindestens zwei erste Befestigungsmechanismen (123) umfasst, die in Richtung einer Seite des Bodendeckels (20) ausgerichtet sind, und der äußere Rand des Bodendeckels (20) zweite Befestigungsmechanismen (124) umfasst, die mit den ersten Befestigungsmechanismen (123) zusammenwirken.

5. Elektrisches Gargerät nach Anspruch 4, **dadurch gekennzeichnet, dass** die zweiten Befestigungsmechanismen (124) in Befestigungsbohrungen oder Befestigungsnuten installiert sind, die sich am Bodendeckel (20) befinden.

6. Elektrisches Gargerät nach Anspruch 5, **dadurch gekennzeichnet, dass** die ersten Befestigungsmechanismen (123) einen Übergangsabschnitt (1231) und einen Anschlagabschnitt (1232) umfassen, die miteinander verbunden sind, die zweiten Befestigungsmechanismen (124) in den Befestigungsbohrungen des Bodendeckels (20) installiert sind, welche Befestigungsbohrungen einen Öffnungsabschnitt (1241) und einen Verengungsabschnitt (1242) umfassen, die miteinander verbunden sind; der Bodendeckel (20) in Bezug auf den Füllzylinder (10) eine erste Betriebsstellung und eine zweite Betriebsstellung aufweist; wenn sich der Bodendeckel (20) in der ersten Betriebsstellung befindet, der Anschlagabschnitt (1232) durch den Öffnungsabschnitt (1241) hindurchgeht; wenn der Bodendeckel (20) aus der ersten Betriebsstellung in die zweite Betriebsstellung überführt wird, der Übergangsabschnitt (1231) aus dem Öffnungsabschnitt (1241) herausgleitet, damit der Anschlagabschnitt (1232) im Bereich des Verengungsabschnitts (1242) anschlägt.

7. Elektrisches Gargerät nach einem der vorstehenden Ansprüche, **dadurch gekennzeichnet, dass** der Öffnungsmechanismus (22) eine gerade Röhrenform oder eine Kegelform aufweist.

8. Elektrisches Gargerät nach einem der vorstehenden Ansprüche, **dadurch gekennzeichnet, dass** der Bodendeckel (20) eine gekrümmte Fläche aufweist, von der eine Seite in die zur Wand des Bodens (12) entgegengesetzte Richtung gewölbt ist, und der Öffnungsmechanismus (22) am geometrischen Mittelpunkt des Bodendeckels (20) liegt.

9. Elektrisches Gargerät nach einem der vorstehenden Ansprüche, **dadurch gekennzeichnet, dass** das Verhältnis zwischen der Öffnungsfläche S1 des Öffnungsmechanismus (22) und dem Querschnitt S der Füllkammer (11) des Füllzylinders (10) größer oder gleich 0,05 und kleiner oder gleich 1,5 ist.

10. Elektrisches Gargerät nach Anspruch 9, **dadurch gekennzeichnet, dass** das Verhältnis zwischen der Öffnungsfläche S1 des Öffnungsmechanismus (22) und dem Querschnitt S der Füllkammer (11) des Füllzylinders (10) größer der gleich 0,3 und kleiner oder gleich 0,8 ist.

11. Elektrisches Gargerät nach Anspruch 1, **dadurch gekennzeichnet, dass** eine zweite Dichtung (4) zwischen dem oberen Teil des Füllzylinders (10) des Dampfkorbs und der Öffnung des Innenbehälters (2) platziert ist.

12. Elektrisches Gargerät nach einem der Ansprüche 1 oder 11, **dadurch gekennzeichnet, dass** das Verhältnis zwischen der Höhe H1 vom Öffnungsmechanismus (22) des Bodendeckels (20) des Dampfkorbs bis zum Boden des Innenbehälters (2), und der Tiefe H des Innenbehälters (2) größer oder gleich 0,1 und kleiner oder gleich 0,8 ist.

13. Elektrisches Gargerät nach einem der Ansprüche 1, 11 oder 12, **dadurch gekennzeichnet, dass** die Wand des Bodens (12) des Füllzylinders (10) des Dampfkorbs eine flache oder gekrümmte Struktur aufweist, und das Verhältnis zwischen der Höhe H2 von der Öffnung des Öffnungsmechanismus (22) bis zum tiefsten Punkt des durchlässigen Bereichs der Wand des Bodens (12), und der Tiefe H des Innenbehälters (2) größer oder gleich 0,1 und kleiner oder gleich 0,8 ist.

14. Elektrisches Gargerät nach Anspruch 1, **dadurch gekennzeichnet, dass** die Wand des Bodens (12) des Füllzylinders (10) des Dampfkorbs eine flache oder gekrümmte Struktur aufweist, und das Verhältnis zwischen der Höhe H3 vom tiefsten Punkt des durchlässigen Bereichs der Wand des Bodens (12) bis zum oberen Rand des Innenbehälters (2), und der Tiefe H des Innenbehälters (2) größer oder gleich 0,1 und kleiner oder gleich 0,8 ist.

## Claims

1. Electric cooker comprising a steamer basket which comprises:
- a filling cylinder (10), said filling cylinder (10) being provided with a filling chamber (11), and a bottom wall (12) of said filling cylinder (10) comprising a permeable area; the permeable area of the bottom wall (12) being pierced with a plurality of water passage holes (122) which extend through the bottom wall (12);
- a bottom cover (20) installed beneath the filling cylinder (10), said bottom cover (20) being connected to the filling cylinder (10) by a hermetic device, the space between the bottom cover (20) and the lower surface of the bottom wall (12) enclosing a water passage cavity (21), the bottom cover (20) being equipped with an opening mechanism (22), said opening mechanism (22) being connected to the filling chamber (11) by means of the water passage cavity (21) and the water passage holes (122),
**characterised in that** the electric cooker comprises an outer housing (1), an inner container (2) positioned inside the outer housing (1), the steamer basket being installed inside the inner container (2), the upper part of the filling cylinder (10) of this steamer basket being hermetically joined to the opening of the inner container (2).

2. Electric cooker according to claim 1, **characterised in that** it comprises a first sealing part installed in the contact area between the bottom cover (20) and the filling cylinder (10).

3. Electric cooker according to claim 1, **characterised in that** the bottom cover (20) and the filling cylinder (10) are assembled.

4. Electric cooker according to any one of the preceding claims, **characterised in that** the outer edge of the bottom wall (12) comprises at least two first fastening mechanisms (123) which are oriented in the direction of one side of the bottom cover (20), and the outer edge of the bottom cover (20) comprises second fastening mechanisms (124) interacting with the first fastening mechanisms (123).

5. Electric cooker according to claim 4, **characterised in that** the second fastening mechanisms (124) are installed in fixation holes or fixation grooves situated on the bottom cover (20).

6. Electric cooker according to claim 5, **characterised in that** the first fastening mechanisms (123) comprise a transition section (1231) and a stopping section (1232) which are interconnected, the second fastening mechanisms (124) are installed in the fixation holes of the bottom cover (20), said fixation holes comprise an interconnected opening section (1241) and a contraction section (1242); the bottom cover (20) has, relative to the filling cylinder (10), a first operating position and a second operating position; when the bottom cover (20) is found in the first operating position, the stopping section (1232) passes through the opening section (1241); when the bottom cover (20) is moved from the first operating position to the second operating position, the transition section (1231) slides out from the opening section (1241), such that the stopping section (1232) stops at the contraction section (1242).

7. Electric cooker according to any one of the preceding claims, **characterised in that** the opening mechanism (22) has a straight, tubular shape or a conical shape.

8. Electric cooker according to any one of the preceding claims, **characterised in that** the bottom cover (20) has a curved surface of which one side is convex in the direction opposite to the bottom wall (12), and the opening mechanism (22) is situated at the geometric centre of the bottom cover (20).

9. Electric cooker according to any one of the preceding claims, **characterised in that** the ratio between the opening surface S1 of the opening mechanism (22) and the cross-section S of the filling chamber (11) of the filling cylinder (10) is greater than or equal to 0.05 and less than or equal to 1.5.

10. Electric cooker according to claim 9, **characterised in that** the ratio between the opening surface S1 of the opening mechanism (22) and the cross-section S of the filling chamber (11) of the filling cylinder (10) is greater than or equal to 0.3 and less than or equal to 0.8.

11. Electric cooker according to claim 1, **characterised in that** a second sealing joint (4) is placed between the upper part of the filling cylinder (10) of the steamer basket and the opening of the inner container (2).

12. Electric cooker according to any one of claims 1 or 11, **characterised in that** the ratio between the height H1 extending from the opening mechanism (22) of the bottom cover (20) of the steamer basket to the bottom of the inner container (2) and the depth H of the inner container (2) is greater than or equal to 0.1 and less than or equal to 0.8.

13. Electric cooker according to any one of claims 1, 11 or 12, **characterised in that** the bottom wall (12) of the filling cylinder (10) of the steamer basket has a flat or curved structure, and the ratio between the height H2 extending from the opening of the opening mechanism (22) to the lowest point of the permeable area of the bottom wall (12) and the depth H of the inner container (2) is greater than or equal to 0.1 and less than or equal to 0.8.

14. Electric cooker according to claim 1, **characterised in that** the bottom wall (12) of the filling cylinder (10) of the steamer basket has a flat or curved structure, and the ratio between the height H3 extending from the lowest point of the permeable area of the bottom wall (12) to the upper edge of the inner container (2) and the depth H of the inner container (2) is greater than or equal to 0.1 and less than or equal to 0.8.
